# FASCICULE DE BREVET EUROPEEN

(11) **EP 0 719 672 B1**
(45) Date de publication et mention de la délivrance du brevet: **08.12.1999**
(21) Numéro de dépôt: 95402623.3
(22) Date de dépôt: 21.11.1995
(51) Int. Cl.: B60Q 1/30

(54) **Agencement d'un feu de signalisation supplémentaire dans le becquet arrière d'un véhicule automobile**
Zusatzwarnleuchteanordnung in Heckspoiler eines Fahrzeuges
Arrangement of supplementary warning lights in vehicle rear spoiler

(30) Priorité: 26.12.1994 FR 9415654
(43) Date de publication de la demande: 03.07.1996
(73) Titulaire: AUTOMOBILES PEUGEOT, 75116 Paris (FR); AUTOMOBILES CITROEN, 92200 Neuilly-sur-Seine (FR)
(72) Inventeur: Gardiner, Geoffrey T., F-78000 Versailles (FR)
(74) Mandataire: Durand, Yves Armand Louis

(56) Documents cités:
- EP-A- 0 047 793
- DE-A- 3 039 740
- FR-A- 2 663 272
- US-A- 4 806 903
- US-A- 4 966 426
- PATENT ABSTRACTS OF JAPAN vol. 10 no. 51 (M-457) [2108] ,28 Février 1986 & JP-A-60 199746 (NISSAN JIDOSHA KK)

## Description

La présente invention a essentiellement pour objet l'agencement d'un feu de signalisation supplémentaire sur un véhicule automobile.

Il a déjà été proposé d'équiper les véhicules automobiles d'un feu supplémentaire de signalisation du freinage afin d'améliorer la sécurité, notamment dans le cas d'une circulation dense de véhicules en file relativement serrée.

Ce troisième feu se situe généralement à un niveau plus élevé que les feux habituels disposés en partie basse de la caisse du véhicule.

Ainsi, il est connu de prévoir un tel troisième feu à l'intérieur du véhicule, sur la tablette arrière et contre la lunette arrière. Un tel agencement présente des inconvénients tels que l'encombrement de la plage arrière et également la réduction de la visibilité du conducteur au travers de la vitre arrière.

Il est également connu d'agencer ce feu de signalisation supplémentaire dans le becquet solidaire de la partie arrière du véhicule, mais cette disposition présente aussi des inconvénients.

Le becquet doit être aménagé d'une façon spéciale pour recevoir le feu, ce qui lui confère un aspect massif ou de bosse qui est très nuisible pour l'esthétique du véhicule et ses qualités aérodynamiques.

En outre, on a remarqué que la visibilité directe de ce feu supplémentaire par le conducteur du véhicule suiveur peut surprendre et même aveugler quelque peu ledit conducteur, de sorte que finalement l'effet de sécurité recherché par ce feu supplémentaire fonctionnant au freinage n'est pas celui escompté.

Aussi, la présente invention a pour but de remédier notamment aux inconvénients ci-dessus en proposant un feu de signalisation supplémentaire de freinage qui ne nuit pas au style et aux qualités aérodynamiques du véhicule, qui est d'une conception mécanique simple et préserve la visibilité du conducteur vers l'arrière du véhicule, et qui ne risque aucunement de surprendre, voire d'aveugler quelque peu le conducteur du véhicule suiveur.

A cet effet, l'invention a pour objet l'agencement d'un feu de signalisation supplémentaire dans un becquet solidaire de la partie arrière d'un véhicule automobile, caractérisé en ce que la source lumineuse solidaire du becquet coopère avec une partie réfléchissante de la vitre arrière du véhicule pour permettre, lors de l'actionnement des moyens de freinage par exemple, la visibilité du feu seulement par réflexion de la lumière vers l'arrière du véhicule.

On comprend donc que le conducteur du véhicule suiveur n'aura pas une vision directe du feu lorsque le conducteur du véhicule qui est devant lui exerce une action de freinage.

Suivant une autre caractéristique de cet agencement, la source lumineuse est logée dans une cavité à l'arrière du becquet qui est fermée en partie inférieure par une paroi transparente formant un angle aigu avec la partie réfléchissante de la vitre arrière du véhicule.

Selon encore une autre caractéristique de cet agencement, la partie arrière du becquet comporte un bord tombé formant écran aux rayons lumineux réfléchis autres que ceux réfléchis dans un plan sensiblement horizontal vers l'arrière du véhicule.

On précisera encore ici que la partie réfléchissante de la vitre arrière est réalisée par dépôt d'une peinture noire ou analogue sur la face intérieure de ladite vitre.

Selon encore une autre caractéristique de l'invention, la cavité précitée recevant la source lumineuse est obturée par un couvercle clippé en partie supérieure de ladite cavité, sur le becquet.

La source lumineuse pourra être constituée par une ampoule ou bien par un ensemble de diodes luminescentes.

Mais d'autres caractéristiques et avantages de l'invention apparaîtront mieux dans la description détaillée qui suit et se réfère aux dessins annexés, donnés uniquement à titre d'exemple, et dans lesquels:
La figure 1 est une vue en perspective d'un becquet arrière muni d'un feu de signalisation supplémentaire conformément aux principes de l'invention.
La figure 2 est une vue en perspective de la partie supérieure du becquet illustrant la partie ou cavité recevant la source lumineuse, le couvercle de cette partie étant représenté en position enlevée.
La figure 3 est une vue en coupe suivant la ligne III-III de la figure 1.

En se reportant aux dessins, on voit un becquet 1 solidaire de la partie arrière d'un véhicule au niveau de la lunette ou vitre arrière 2.

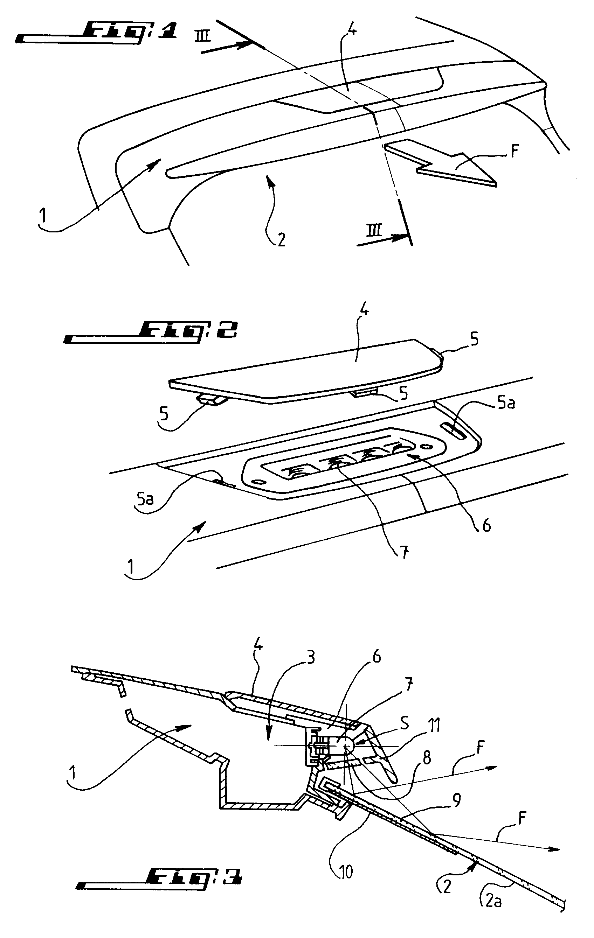

Le becquet 1 forme une cavité 3 qui reçoit une source lumineuse S et qui est obturée en partie supérieure par un couvercle 4 qui peut être monté par clippage sur ladite cavité. On a montré en 5 sur la figure 2 des pattes, clips ou analogues solidaires du couvercle 4 et permettant le clippage de ce couvercle dans des orifices 5a du becquet 1.

Comme on le voit mieux sur la figure 3, la source lumineuse S est essentiellement constituée par un support 6 portant une ampoule 7 ou bien encore un ensemble de diodes luminescentes.

Comme on le voit encore sur la figure 3, la cavité 3 recevant le support 6 est fermée en partie inférieure par une paroi transparente repérée en 8 et permettant le passage vers le bas des rayons lumineux émis par l'ampoule 7.

Cette paroi transparente 8 forme un angle aigu avec la lunette arrière 2 du véhicule qui, en partie haute, comporte une partie réfléchissante montrée en 9 sur la figure 3.

Suivant un mode de réalisation, cette partie réfléchissante 9 est réalisée par le dépôt d'une peinture noire 10 par exemple, sur la face intérieure 2a de la lunette arrière 2.

On a montré en 11 sur la figure 3 un bord tombé qui ferme l'extrémité arrière de la cavité 3 du becquet 1 et qui fait écran aux rayons lumineux réfléchis autres que ceux qui sont réfléchis par la partie 9 de la vitre arrière 2 dans un plan sensiblement horizontal vers l'arrière du véhicule et qui sont matérialisés par des flèches F sur les figures 1 et 3.

On comprend donc de la description qui précède que l'angle aigu formé par la paroi transparente 8 et la vitre arrière 2 du véhicule permet à la lumière émise par l'ampoule 7 de se réfléchir sur la zone ou partie réfléchissante 9 de la vitre 2, et cela suivant un plan sensiblement horizontal, grâce au bord tombé 11, de sorte que le conducteur du véhicule suiveur ne risquera pas d'être surpris ou même quelque peu aveuglé par le feu lors du freinage.

Il est aussi important d'observer que l'agencement qui vient d'être décrit permet de rendre invisibles les moyens de signalisation lorsque la source lumineuse est éteinte, la signalisation n'étant perçue que par la réflexion totale sur la lunette arrière 2 lorsque la source lumineuse S est activée sous l'effet d'une action de freinage.

On a donc réalisé suivant l'invention un feu supplémentaire de freinage qui n'encombre ni la tablette arrière ni la vitre arrière d'un véhicule automobile, qui ne nuit pas à l'esthétique et aux qualités aérodynamiques du véhicule et qui ne nécessite pas non plus la prévision d'un système de motorisation.

L'invention n'est nullement limitée au mode de réalisation décrit et illustré qui n'a été donné qu'à titre d'exemple.

C'est ainsi que la source lumineuse peut être constituée par des moyens appropriés quelconques, de même que la réalisation de la partie réfléchissante de la vitre arrière peut être quelconque.

## Revendications

1. Agencement d'un feu de signalisation supplémentaire dans un becquet (1) solidaire de la partie arrière d'un véhicule automobile, caractérisé en ce que la source lumineuse (S) solidaire du becquet (1) coopère avec une partie réfléchissante (9) de la vitre arrière (2) du véhicule pour permettre, lors de l'actionnement des moyens de freinage par exemple, la visibilité du feu seulement par réflexion de la lumière vers l'arrière du véhicule.

2. Agencement selon la revendication 1, caractérisé en ce que la source lumineuse (S) est logée dans une cavité (3) à l'arrière du becquet (1) qui est fermée en partie inférieure par une paroi transparente (8) formant un angle aigu avec la partie réfléchissante (9) de la vitre arrière (2) du véhicule.

3. Agencement selon la revendication 1 ou 2, caractérisé en ce que la partie arrière du becquet (1) comporte un bord tombé (11) formant écran aux rayons lumineux réfléchis autres que ceux réfléchis dans un plan sensiblement horizontal vers l'arrière du véhicule.

4. Agencement selon l'une des revendications 1 à 3, caractérisé en ce que la partie réfléchissante (9) de la vitre arrière (2) est réalisée par dépôt d'une peinture noire (10) sur la face intérieure (2a) de ladite vitre (2).

5. Agencement selon la revendication 2, caractérisé en ce que la cavité précitée (3) recevant la source lumineuse (S) est obturée par un couvercle (4) clippé en partie supérieure de ladite cavité sur le becquet (1).

6. Agencement selon l'une des revendications précédentes, caractérisé en ce que la source lumineuse précitée (S) est constituée par une ampoule ou un ensemble de diodes luminescentes.

## Claims

1. Arrangement for a supplementary signalling lamp in a spoiler (1) rigidly joined to the rear part of a motor vehicle, characterised in that the light source (S) rigidly joined to the spoiler (1) cooperates with a reflective portion (9) of the rear window (2) of the vehicle so as to allow, for example when the braking means are operated, the lamp to be visible solely by reflection of the light towards the rear of the vehicle.

2. Arrangement according to claim 1, characterised in that the light source (S) is housed in a cavity (3) at the rear of the spoiler (1), said cavity being closed in the lower portion by a transparent wall (8) which forms an acute angle with the reflective portion (9) of the rear window (2) of the vehicle.

3. Arrangement according to claim 1 or 2, characterised in that the rear part of the spoiler (1) has a flanged edge (11) which forms a filter for the reflected light rays other than those reflected in a substantially horizontal plane towards the rear of the vehicle.

4. Arrangement according to any of claims 1 to 3, characterised in that the reflective portion (9) of the rear window (2) is produced by applying a black paint (10) to the internal face (2a) of said window (2).

5. Arrangement according to claim 2, characterised in that the aforementioned cavity (3) receiving the light source (S) is closed by a cover (4) clipped onto the spoiler (1) in the upper portion of said cavity.

6. Arrangement according to any of the preceding claims, characterised in that the aforementioned light source (S) is constituted by a bulb or an LED array.

## Patentansprüche

1. Anordnung einer zusätzlichen Warnleuchte in dem Heckspoiler (1) eines Kraftfahrzeugs, dadurch gekennzeichnet, daß die mit dem Spoiler (1) fest verbundene Lichtquelle (S) mit einem reflektierenden Teil (9) des Rückfensters (2) des Kraftfahrzeugs zusammenwirkt, um, etwa beim Betätigen der Bremse, die Leuchte nur durch Reflexion des Lichts aus dem Fahrzeug heraus nach hinten sichtbar werden zu lassen.

2. Anordnung nach Anspruch 1, dadurch gekennzeichnet, daß die Lichtquelle (S) in einem im hinteren Teil des Spoilers (1) befindlichen Hohlraum (3) angeordnet ist, der im unteren Teil durch eine durchsichtige Wand (8) abgeschlossen ist, die mit dem reflektierenden Teil (9) des Rückfensters (2) des Fahrzeugs einen spitzen Winkel einschließt.

3. Anordnung nach Anspruch 1 oder 2, dadurch gekennzeichnet, daß der hintere Teil des Spoilers (1) einen abfallenden Rand (11) bildet, der eine Abschirmung für die reflektierten Lichtstrahlen darstellt, außer für die, die in eine im wesentlichen horizontal nach hinten verlaufende Ebene aus dem Fahrzeug heraus reflektiert werden.

4. Anordnung nach einem der Ansprüche 1 bis 3, dadurch gekennzeichnet, daß der reflektierende Teil (9) des Rückfensters (2) als eine Schicht von schwarzer Farbe (10) auf der Innenseite (2a) des genannten Fensters (2) ausgeführt ist.

5. Anordnung nach Anspruch 2, dadurch gekennzeichnet, daß der genannte, die Lichtquelle (S) aufnehmende Hohlraum (3) abgeschlossen ist durch eine Abdeckung (4), die an dem oberen Teil des genannten Hohlraums auf den Spoiler (1) geklippt ist.

6. Anordnung nach einem der vorhergehenden Ansprüche, dadurch gekennzeichnet, daß die genannte Lichtquelle (S) von einer Glühlampe oder einer Gruppe von Leuchtdioden gebildet ist.
